# EUROPÄISCHE PATENTSCHRIFT

(11) **EP 3 027 476 B1**
(45) Veröffentlichungstag und Bekanntmachung des Hinweises auf die Patenterteilung: **15.03.2017**
(21) Anmeldenummer: 15777927.3
(22) Anmeldetag: 07.10.2015
(51) Int. Cl.: B60S 9/10

(54) **LANDFAHRZEUG MIT EINER MEHRZAHL VON ECKSTÜTZEINHEITEN**
LAND VEHICLE WITH A PLURALITY OF CORNER SUPPORT UNITS
VÉHICULE TERRESTRE AVEC UNE PLURALITÉ D'UNITÉS DE SUPPORT DE COIN DE VÉHICULE

(30) Priorität: 07.10.2014 DE 102014014586
(43) Veröffentlichungstag der Anmeldung: 08.06.2016
(73) Patentinhaber: Hoerbiger Automatisierungstechnik Holding GmbH, 86972 Altenstadt (DE)
(72) Erfinder: AHLE, Alexander, 93167 Falkenstein (DE)
(74) Vertreter: Grättinger Möhring von Poschinger Patentanwälte Partnerschaft
(86) Internationale Anmeldenummer: PCT/EP2015/073164
(87) Internationale Veröffentlichungsnummer: WO 2016/055528

(56) Entgegenhaltungen:
- GB-A- 2 109 322
- US-A- 3 442 530
- US-A1- 2003 001 373

## Beschreibung

Die vorliegende Erfindung betrifft ein Landfahrzeug mit einem Chassis und einer Mehrzahl von daran angebrachten Eckstützeinheiten, welche jeweils einen an dem Chassis montierten Lagerkörper, ein an diesen um eine im Wesentlichen horizontale Achse schwenkbar angelenktes, in sich starres Stützbein und einen Verschwenkantrieb für das Stützbein umfassen.

Für verschiedene Landfahrzeuge ist es wichtig, dass sie sich im (auf einem Untergrund) abgestellten Zustand nivellieren und in der nivellierten Stellung stabilisieren lassen. Dies gilt insbesondere für Campingfahrzeuge, namentlich für Wohnwagen. Zu diesem Zweck sind an den betreffenden Landfahrzeugen mehrere Eckstützeinheiten vorgesehen, welche jeweils ein auf den Untergrund absenkbares Stützbein umfassen.

Solche Eckstützeinheiten sind in verschiedenen Bauweisen bekannt. Zu unterscheiden ist dabei insbesondere dahingehend, ob ein Stützbein mit fest vorgegebener Länge zum Einsatz kommt (z.B. DE 7806499 U, US 6089603 A, EP 163544 A, GB 2109322 A, US 2003/0001373 A1) oder aber ein längenveränderliches Stützbein. Im zuletzt genannten Fall können die Stützbeine insbesondere mehrere - im Sinne eines Teleskops - bezüglich einander (z.B. hydraulisch) längsverschiebbare Elemente oder aber mehrere - im Sinne eines Scherenwagenhebers - gelenkig miteinander verbundene Glieder umfassen, wobei das betreffende längenveränderbare Stützbein zudem ggf. (zwischen einer Betriebsstellung und einer Verstaustellung) um eine im Wesentlichen horizontale Achse verschwenkbar gelagert sein kann. Bei Eckstützeinheiten mit einem Stützbein, welches eine fest vorgegebene Länge aufweist, ist das Stützbein regelmäßig, wie eingangs angegeben, um eine im Wesentlichen horizontale Achse verschwenkbar gelagert. Um das Landfahrzeug auf dem Untergrund abzustützen, wird das Stützbein aus seiner angehobenen Verstaustellung in seine abgesenkte Betriebsstellung verschwenkt, bis es mit einem an seinem Ende (ggf. gelenkig) angeordneten Fuß auf dem Untergrund aufsetzt und das Landfahrzeug - in Verbindung mit dessen weiteren Eckstützeinheiten - nivelliert und in der nivellierten Stellung stabilisiert.

Für das Verschwenken der Stützbeine von Eckstützeinheiten kommen verbreitet Spindelantriebe zum Einsatz. Dies gilt insbesondere für Eckstützeinheiten der eingangs angegebenen Art mit einem in sich starren, d.h. nicht längenveränderlichen Stützbein. Die mehr oder weniger horizontal orientierte Spindel des betreffenden Spindelantriebs ist dabei typischerweise mittels einer auf ein Ende der Spindel aufsteckbaren Handkurbel verdrehbar. Zwischen einer Spindelmutter, welche auf der (auf Zug beanspruchten) Spindel angeordnet ist, und dem Stützbein wirkt dabei ein mit beiden Teilen gelenkig verbundener, auf Druck beanspruchter Lenker. Für einen gesteigerten Komfort sind im Übrigen vergleichbare Eckstützeinheiten dergestalt mit einer hydraulischen Zylinder-Kolben-Einheit ausgestattet, dass die Spindel jeweils durch einen Hydraulikzylinder ersetzt ist. Die Hydraulikzylinder werden von einem gemeinsamen, zentralen Hydraulikaggregat mit einer elektrisch angetriebenen Pumpe gespeist, wobei eine zentrale Steuer- und Bedieneinheit (ggf. automatisch unter Verwendung der Signale von Lagesensoren) auf eine Ventilgruppe einwirkt, um die einzelnen Hydraulikzylinder individuell entsprechend dem Bedarf zu beaufschlagen.

Ein Landfahrzeug nach dem Oberbegriff des Anspruchs 1, welches sich zusätzlich zu den eingangs angegebenen Merkmalen dadurch auszeichnet, dass jede der Eckstützeinheiten mindestens eine endseitig einerseits an dem Lagerkörper und andererseits an dem Stützbein angelenkte hydraulische Zylinder-Kolben-Einheit umfasst, ist aus der US 2003/0001373 A1 bekannt.

Vor dem Hintergrund dieses Standes der Technik liegt der vorliegenden Erfindung die Aufgabe zugrunde, ein verbessertes Landfahrzeug der eingangs angegeben Art bereitzustellen, dessen der Nivellierung des Fahrzeugs und dessen Stabilisierung in der nivellierten Stellung dienendes, eine Mehrzahl von Eckstützeinheiten umfassendes Nivelliersystem namentlich besonders leicht, kompakt und zuverlässig sein soll, wobei ferner das Nivelliersystem möglichst leicht und mit geringen Aufwand nachrüstbar sein soll, wobei im Sinne vergleichsweise geringer Aus- bzw. Nachrüstungskosten weiterhin angestrebt ist, dass sich ein und dasselbe vorgehaltene Nivelliersystem - mit nur vergleichsweise geringem Anpassungsaufwand - zur Montage an unterschiedlichen Fahrzeugen eignet.

Gelöst wird die vorstehende, wegen teilweiser Konkurrenz der einzelnen Teilziele komplexe Aufgabenstellung durch das in Anspruch 1 angegebene Landfahrzeug. Demnach zeichnet sich das erfindungsgemäße, ein Chassis und eine Mehrzahl von daran angebrachten Eckstützeinheiten, welche jeweils einen an dem Chassis montierten Lagerkörper und ein an diesem um eine im Wesentlichen horizontale Achse schwenkbar angelenktes Stützbein umfassen, aufweisende Landfahrzeug insbesondere dadurch aus, dass jede der Eckstützeinheiten mindestens eine endseitig einerseits an dem Lagerkörper und andererseits an dem Stützbein angelekte hydraulische Zylinder-Kolben-Einheit sowie ein diese mindestens eine Zylinder-Kolben-Einheit direkt beaufschlagendes, an dem Lagerkörper angeordnetes Hydraulikaggregat umfasst. In durchaus überraschender Weise äußert sich die für das erfindungsgemäße Landfahrzeug charakteristische Ausführung des Nivelliersystems in einer Reihe praxisrelevanter Vorteile. So können die einzelnen Eckstützeinheiten, obwohl jede einzelne von ihnen ein eigenes, nur die mindestens eine hydraulische Zylinder-Kolben-Einheit dieser Eckstützeinheit versorgendes Hydraulikaggregat umfasst, sehr kompakt ausgeführt sein. Dazu trägt bei, dass die mindestens eine hydraulische Zylinder-Kolben-Einheit unmittelbar zwischen dem - an dem Chassis des Landfahrzeugs montierten - Lagerkörper und dem Stützbein wirkt. Ein Verbindungslenker ist nicht vorgesehen. Damit bewirkt ein Ausfahren der Kolbenstange der mindestens einen hydraulischen Zylinder-Kolben-Einheit ein Absenken des zugeordneten Stützbeines; oder, mit anderen Worten, die mindestens eine hydraulische Zylinder-Kolben-Einheit ist auf Druck beansprucht. Folglich wird für das Abstützen des Landfahrzeugs der Kolbenarbeitsraum beaufschlagt, nicht indessen der Kolbenstangenarbeitsraum. Damit kann die erforderliche Kraft durch eine sehr kompakte hydraulische Zylinder-Kolben-Einheit bereitgestellt werden. Zudem ist insbesondere im Hinblick auf langfristig nivelliert abgestellte Landfahrzeuge hervorzuheben, dass sich in dem (nur durch eine gleitende Dichtung abgedichteten) Kolbenarbeitsraum Hydraulikflüssigkeit unter hohem Druck zuverlässiger einsperren lässt als in dem (durch zwei gleitende Dichtungen abgedichteten) Kolbenstangenarbeitsraum. Daher und auch deshalb, weil es keine ein zentrales Hydraulikaggregat mit den einzelnen Eckstützeinheiten verbindenden Hydraulikleitungen gibt, kann das bei dem erfindungsgemäßen Landfahrzeug eingesetzte Nivelliersystem mit einem höheren Hydraulikdruck betrieben werden als bekannte hydraulische Nivelliersysteme. Dies erlaubt wiederum den Einsatz ganz besonders kompakter hydraulischer Zylinder-Kolben-Einheiten. Dass an dem mit den Eckstützeinheiten auszustattenden Landfahrzeug keine Hydraulikleitungen zu verlegen sind, ist zudem ein in mehrfacher anderer Hinsicht vorteilhafter Aspekt. So lässt sich der Montageaufwand minimieren. Es bedarf insbesondere keiner Druck- bzw. Dichtigkeitsprüfung in der das Nivelliersystem montierenden Werkstatt, weil die Verbindungen der - dezentralen Hydraulikaggregate - zu den jeweils unmittelbar zugeordneten hydraulischen Zylinder-Kolben-Einheiten werksseitig beim Hersteller der kompletten Eckstützeinheiten erfolgen kann. Und es liegen keine Hydraulikleitungen in dem gegen Steinschlag gefährdeten Unterbodenbereich des Fahrzeugs.

Gemäß einer ersten bevorzugten Weiterbildung der vorliegenden Erfindung schließt die Achse der mindestens einen hydraulischen Zylinder-Kolben-Einheit mit der Erstreckung des Stützbeines über den gesamten Verschwenkbereich des Stützbeines einen spitzen Winkel ein. Dies ist im Hinblick auf die angestrebte besondere Kompaktheit der Eckstützeinheit, wie sie einen wesentlichen Aspekt hinsichtlich der möglichst universalen Einsetzbarkeit der Eckstützeinheiten an unterschiedlichsten, sich durch verschiedenste Einbausituationen auszeichnenden Fahrzeugen darstellt, sehr bedeutsam. Dass auch bei diesen geometrischen Verhältnissen für viele übliche Anwendungen hinreichende Stützkräfte bereitgestellt werden können, hängt wiederum mit der weiter oben erläuterten Möglichkeit zusammen, mit besonders hohen Hydraulikdrücken zu arbeiten. Mit der vorstehend dargelegten, besonders günstigen Geometrie der jeweiligen Eckstützeinheit steht im Zusammenhang, dass bevorzugt der Versatz zwischen der Anlenkung des Stützbeines an dem Lagerkörper und der der hydraulischen Zylinder-Kolben-Einheit an dem Lagerkörper wesentlich geringer ist als der Versatz zwischen der Anlenkung des Stützbeines an dem Lagerkörper und der der hydraulischen Zylinder-Kolben-Einheit an dem Stützbein.

Eine andere bevorzugte Weiterbildung der vorliegenden Erfindung zeichnet sich dadurch aus, dass das Stützbein benachbart dem Lagerkörper gegabelt ist und zwei Äste aufweist, wobei die mindestens eine hydraulische Zylinder-Kolben-Einheit zumindest bereichsweise in dem Zwischenraum zwischen den beiden Ästen angeordnet ist. Die auf diese Weise geschützte Unterbringung der mindestens einen hydraulischen Zylinder-Kolben-Einheit kommt der Zuverlässigkeit zugute, weil das Risiko einer Beschädigung der hydraulischen Zylinder-Kolben-Einheit durch Steinschlag und/oder von der Fahrbahn aufgeschleuderte Gegenstände minimiert ist. Zudem lassen sich in diesem Falle besonders günstige statische Verhältnisse erzielen, indem nämlich das Stützbein an dem Lagerkörper an zwei zueinander beabstandeten Gelenkpunkten angelenkt ist, wobei die mindestens eine hydraulische Zylinder-Kolben-Einheit an dem Lagerkörper zwischen den beiden Gelenkpunkten angelenkt ist.

Gemäß einer wiederum anderen bevorzugten Weiterbildung der Erfindung ist der Lagerkörper schalenförmig ausgeführt und umschließt zumindest teilweise einen Raum, in welchem das Hydraulikaggregat angeordnet ist. Die hierdurch äußerst geschützte Unterbringung des Hydraulikaggregats wirkt sich ebenfalls positiv auf die Zuverlässigkeit und Langlebigkeit des Nivelliersystems aus. Im Hinblick auf möglichst kompakte Abmessungen des Lagerkörpers ist dabei von Vorteil, wenn sich das Hydraulikaggregat bezogen auf den Anlenkpunkt des Stützbeines an dem Lagerkörper zu beiden Seiten von diesem erstreckt.

Vorteilhaft ist weiterhin, wenn die mindestens eine hydraulische Zylinder-Kolben-Einheit doppeltwirkend und das Hydraulikaggregat reversierbar ausgeführt sind, wobei in dem hydraulischen System zwischen dem Hydraulikaggregat und der mindestens einen hydraulischen Zylinder-Kolben-Einheit keinerlei Ventile vorgesehen sind. Der hierdurch mögliche Wegfall eines steuerbare Ventile aufweisenden Ventilblockes ist wiederum ein Aspekt im Hinblick auf minimale Abmessungen der Eckstützeneinheiten. Und zudem ergeben sich Vorteile hinsichtlich der Zuverlässigkeit. Je nach der spezifischen Nutzung kann indessen zwischen dem Hydraulikaggregat und der hydraulischen Zylinder-Kolben-Einheit beispielsweise ein (entsperrbares) Rückschlagventil vorgesehen sein, welches die Hydraulikflüssigkeit in dem für das Absenken des Stützbeines maßgeblichen Arbeitsraum der Zylinder-Kolben-Einheit einsperrt, um das Landfahrzeug langfristig in der nivellierten Stellung zu stabilisieren. Neben einem hydraulischen Entsperren des Rückschlagventils (zum Angeben des Stützbeins) kann auch eine Möglichkeit, dieses mechanisch zu Entsperren vorgesehen sein, insbesondere als Teil einer Notentriegelung.

Eine alternative bevorzugte Weiterbildung, welche sich für die Bereitstellung besonders hoher Stützkräfte eignet, zeichnet sich - abweichend von der weiter oben dargelegten ersten bevorzugten Weiterbildung - dadurch aus, dass der Lagerkörper einen Fortsatz aufeist, an welchem die mindestens eine hydraulische Zylinder-Kolben-Einheit der betreffenden Eckstützeinheit endseitig gelenkig gelagert ist, wobei der Versatz zwischen der Anlenkung des Stützbeines an dem Lagerkörper und der hydraulischen Zylinder-Kolben-Einheit an dem Lagerkörper größer ist als der Versatz zwischen der Anlenkung des Stützbeines an dem Lagerkörper und der hydraulischen Zylinder-Kolben-Einheit an dem Stützbein.
Auch bei dieser Weiterbildung lassen sich die weiteren dargelegten bevorzugten technischen Aspekte mit großem Vorteil realisieren, so die gegabelte Ausführung des Stützbeines benachbart zum Lagerkörper, insbesondere mit einer Anlenkung des Stützbeins an dem Lagerkörper an zwei zueinander beabstandeten Gelenkpunkten, sowie die zumindest teilweise schalenförmige Ausführung des Lagerkörpers dergestalt, dass er zumindest teilweise einen Raum umschließt, in welchem das Hydraulikaggregat angeordnet ist.
Im Folgenden wird die vorliegende Erfindung anhand zweier in der Zeichnung veranschaulichter bevorzugter Ausführungsbeispiele von der bei einem erfindungsgemäßen Landfahrzeug einsetzbaren Eckstützeneinheiten näher erläutert. Dabei zeigt - unter Verzicht auf die Darstellung des gesamten mit mehreren derartigen Eckstützeinheiten ausgestatteten Landfahrzeugs, weil dies angesichts der zahlreichen den Stand der Technik zu mit Eckstützeinheiten ausgestatteten Landfahrzeugen als solchen dokumentierenden Publikationen (s.o.), die durch Bezugnahme zum Inhalt der vorliegenden Offenbarung gemacht werden, für das Verständnis der Erfindung nicht erforderlich ist -
- Fig. 1: in einer ersten und in
- Fig. 2: in einer zweiten Ansicht ein erstes bevorzugtes Ausführungsbeispiel einer solchen Eckstützeinheit und
- Fig. 3: ein zweites bevorzugtes Ausführungsbeispiel einer solchen Eckstützeinheit.

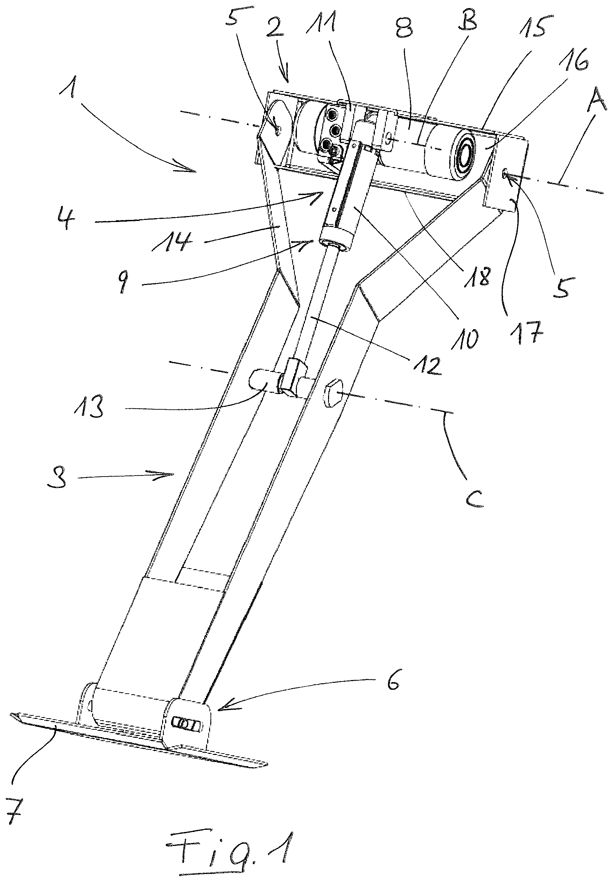

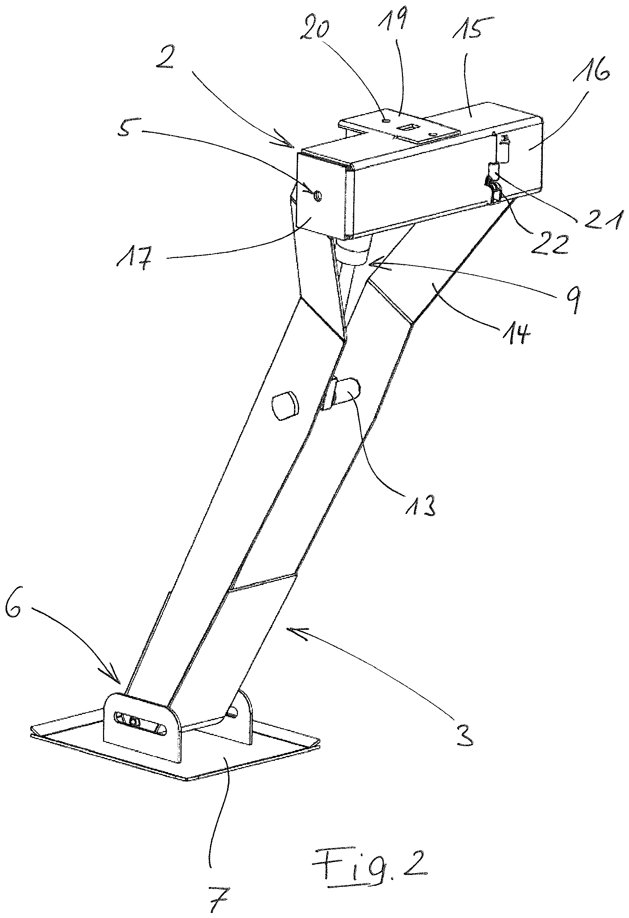

Die in den Figuren 1 und 2 der Zeichnung gezeigte Eckstützeinheit 1 umfasst drei Hauptkomponenten, nämlich einen Lagerkörper 2, ein Stützbein 3 und einen Verschwenkantrieb 4. Der Lagerkörper 2 ist zur Befestigung der Eckstützeinheit 1 an dem Chassis eines Landfahrzeugs ausgeführt und geeignet und weist hierfür vorgesehene Befestigungselemente (Bohrungen etc.) auf. An ihm ist das Stützbein 3 um eine im Wesentlichen horizontale Achse A schwenkbar angelenkt. Das Stützbein 3 ist in sich starr, d.h. es ändert im Betrieb weder seine Länge, noch seine Gestalt. Es ist benachbart dem Lagerkörper 2 in Richtung auf diesen zur Bildung einer Y-förmigen Erweiterung gegabelt, so dass an dem Lagerkörper 2 an zwei zueinander beabstandeten Gelenkpunkten 5 angelenkt ist. An seinem freien, der Anlenkung an dem Lagerkörper 2 gegenüberliegenden Ende 6 trägt das Stützbein 3 einen gelenkig und verschiebbar angebrachten Stützfuß 7.

Der Verschwenkantrieb 4 für das Stützbein 3 umfasst ein an dem Lagerkörper 2 angeordnetes Hydraulikaggregat 8 und eine von diesem direkt beaufschlagte hydraulische Zylinder-Kolben-Einheit 9. Letztere ist endseitig einerseits an dem Lagerkörper 2 und andererseits an dem Stützbein 3 angelenkt. Hierzu ist der Zylinder 10 der Zylinder-Kolben-Einheit gelenkig an dem Lagerkörper 2 angebracht, zu welchem Zweck an diesem etwa mittig zwischen den beiden Gelenkpunkten 5 zwei Lagerlaschen 11 angeordnet sind; und die Kolbenstange 12 der Zylinder-Kolben-Einheit 9 ist endseitig - ebenfalls gelenkig - mit dem Gelenkbolzen 13 des Stützbeins 3 verbunden. Die Schwenkachsen B und C der gelenkigen Anlenkung der Zylinder-Kolben-Einheit 9 an dem Lagerkörper 2 bzw. an dem Stützbein 3 sind dabei zueinander und zu der Schwenkachse A des Stützbeins 3 parallel. Die geometrischen Verhältnisse sind dabei so gewählt, dass der Versatz zwischen den Schwenkachsen A und B der gelenkigen Anlenkung des Stützbeins 3 an dem Lagerkörper 2 und der gelenkigen Anlenkung der hydraulischen Zylinder-Kolben-Einheit 9 an dem Lagerkörper 2 wesentlich geringer ist als der Abstand der Schwenkachse C der gelenkigen Anlenkungen der Zylinder-Kolben-Einheit 9 an dem Stützbein 3 zur Schwenkachse A der Anlenkung des Stützbeines 3 an dem Lagerkörper 2. Über den gesamten Verschwenkbereich des Stützbeines 3 schließt die Achse der hydraulischen Zylinder-Kolben-Einheit 9 mit der Erstreckung des Stützbeines einen spitzen Winkel ein. Zu ihrem Schutz vor Beschädigung ist die hydraulische Zylinder-Kolben-Einheit 9 in dem Zwischenraum zwischen den beiden Ästen 14 des Stützbeins 3 angeordnet.

Für die geschützte Unterbringung des Hydraulikaggregats 8 and dem Lagerkörper 2 ist letzterer schalenförmig ausgeführt. Er umfasst eine obere Wand 15, eine Seitenwand 16, zwei Stirnwände 17 und eine untere Wand 18, wobei an den beiden Seitenwänden 17 die beiden Gelenkpunkte 5 definiert sind. Infolge der schalenförmigen Gestaltung umschließt der Lagerkörper 2 zumindest teilweise einen Raum, in welchem - sich zu beiden Seiten der Lagerlaschen 11 erstreckend - das Hydraulikaggregat 8 angeordnet ist. Durch eine zusätzliche, der Seitenwand 16 gegenüberliegend anzuordnende Wand könnte der Schutz des Hydraulikaggregats 8 noch weitergehend verbessert werden. Für den gleichen Zweck könnten auch an dem Stützbein 3 benachbart dem Lagerkörper 2 Abschirmelemente vorgesehen sein, welche zumindest bei hochgeschwenktem Stützbein 3 den von dem Lagerkörper 2 umschlossenen Raum mehr oder weniger verschließen.

Fig. 2 lässt erkennen, dass an die obere Wand 15 des Lagerkörpers 2 ein Anschlussblech 19 angeschlossen ist. Dieses trägt nicht nur die beiden Lagerlaschen 11. Vielmehr weist es auch die der Befestigung der Eckstützeinheit an dem Fahrzeugchassis dienenden Bohrungen 20 auf. Ferner ist der in der Seitenwand 16 des Lagerkörpers 2 angeordnete Durchbruch 21 erkennbar, der der Durchführung eines das Hydraulikaggregat 8 versorgenden Stromkabels 22 dient.

Das Stützbein 3 wird nicht nur - durch Ausfahren der Kolbenstange 12 der hydraulischen Zylinder-Kolben-Einheit 9 - hydraulisch abgesenkt. Es wird vielmehr auch hydraulisch angehoben. Hierzu sind die hydraulische Zylinder-Kolben-Einheit 9 doppeltwirkend und das Hydraulikaggregat 8 reversierbar ausgeführt, so dass allein durch Umsteuerung des Motors des Hydraulikaggregats 8 zwischen dem Absenken und dem Anheben des Stützbeins 3 gewechselt werden kann.

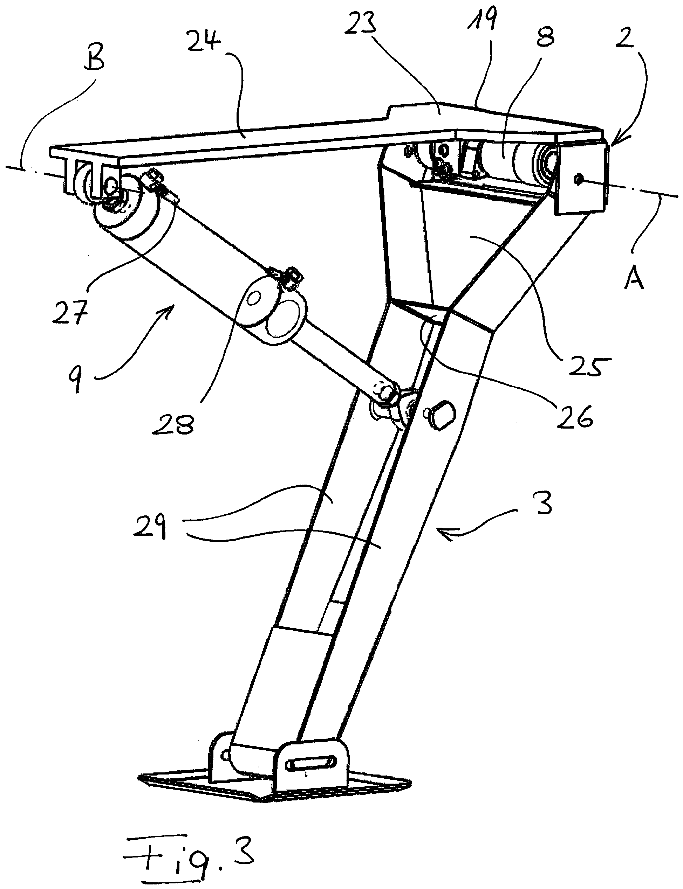

Bei dem in Fig. 3 gezeigten Ausführungsbeispiel ist das Anschlussblech 19, an welchem die hydraulische Zylinder-Kolben-Einheit 9 um die Schwenkachse B gelenkig gelagert ist, als Grundplatte 23 des Lagerkörpers 2 ausgeführt gegenüber dem ersten Ausführungsbeispiel dergestalt verlängert, dass der Lagerkörper 2 einen Fortsatz 24 aufweist. Hier ist der Versatz zwischen der Anlenkung des Stützbeines 3 an dem Lagerkörper 2 und der Anlenkung der hydraulischen Zylinder-Kolben-Einheit 9 an dem Lagerkörper 2 beträchtlich größer ist als der Versatz zwischen der Anlenkung des Stützbeines 3 an dem Lagerkörper 2 und der Anlenkung der hydraulischen Zylinder-Kolben-Einheit 9 an dem Stützbein 3.

Insbesondere in seinem gegabelten Bereich kann das Stützbein 3 zwischen seinen beiden Ästen 14 eine diese miteinander verbindende Abdeckung 25 aufweisen. Diese bewirkt nicht nur eine erhebliche Aussteifung des Stützbeines 3. Vielmehr kann - in der nach oben geschwenkten Stellung des Stützbeins - die besagte Abdeckung 25 gemeinsam mit den beiden Ästen 14 des Stützbeins 3 (sowie einem sich ggf. zwischen diesen erstreckenden Abschlussblech 26) und der Grundplatte 23 des Lagerkörpers 2 den durch den schalenförmigen Teil des Lagerkörpers definierten, das Hydraulikaggregat 8 aufnehmenden Raum mehr oder weniger hermetisch verschließen. Während der Fortbewegung des Landfahrzeuges ist auf diese Weise das Hydraulikaggregat 8 optimal vor Beschädigung und Verschmutzung geschützt.

Durch eine Verlängerung der Abdeckung 25 nach unten in Richtung auf den Fuß 6, so dass sich gemeinsam mit den beiden Seitenblechen 29 des Stützbeines 3 für dieses (unterhalb der Gabelung) ein U-förmiger Querschnitt ergibt, lässt sich bei angehobenem Stützbein 3 eine weitgehende Kapselung der Zylinder-Kolben-Einheit 9 innerhalb des durch den Fortsatz 24 und das Stützbein 3 umschlossenen Hohlraumes erreichen, so dass auch die Zylinder-Kolben-Einheit 9 bei angehobenem Stützbein optimal vor Verschmutzung und Beschädigung geschützt ist.

Die das Hydraulikaggregat 8 mit der Zylinder-Kolben-Einheit 9 verbindenden Hydraulikleitungen können werksseitig fest verlegt sein. Sie können sogar als - nicht gezeigte - starre Rohrleitungen ausgeführt sein, namentlich indem beide Anschlüsse 27, 28 der Zylinder-Kolben-Einheit 9 zu Hydraulik-Gelenkkupplungen mit zu der Schwenkachse B der Zylinder-Kolben-Einheit 9 fluchtenden Gelenkachsen geführt sind. Für die Durchführung besagter Rohrleitungen können in dem Abschlussblech 26 entsprechende Aussparungen vorgesehen sein.

Im Übrigen ergibt sich der Aufbau und die Funktion des in Fig. 3 veranschaulichten Ausführungsbeispiels aus den vorstehenden Erläuterungen der Figuren 1 und 2.

## Patentansprüche

1. Landfahrzeug mit einem Chassis und einer Mehrzahl von daran angebrachten Eckstützeinheiten (1), welche jeweils einen an dem Chassis montierten Lagerkörper (2), ein an diesem um eine im Wesentlichen horizontale Achse (A) schwenkbar angelenktes, in sich starres Stützbein (3) und einen Verschwenkantrieb (4) für das Stützbein umfassen, wobei jede der Eckstützeinheiten (1) mindestens eine endseitig einerseits an dem Lagerkörper (2) und andererseits an dem Stützbein (3) angelenkte hydraulische Zylinder-Kolben-Einheit (9) umfasst, **dadurch gekennzeichnet, dass** jede der Eckstützeinheiten (1) weiterhin ein die mindestens eine hydraulische Zylinder-Kolben-Einheit (9) direkt beaufschlagendes, an dem Lagerkörper (2) angeordnetes Hydraulikaggregat (8) umfasst.

2. Landfahrzeug nach Anspruch 1, **dadurch gekennzeichnet, dass** über den gesamten Verschwenkbereich des Stützbeines (3) die Achse der mindestens einen hydraulischen Zylinder-Kolben-Einheit (9) mit der Erstreckung des Stützbeines (3) einen spitzen Winkel einschließt.

3. Landfahrzeug nach Anspruch 1 oder Anspruch 2, **dadurch gekennzeichnet, dass** das Stützbein (3) benachbart dem Lagerkörper (2) gegabelt ist und zwei Äste (14) aufweist, wobei die mindestens eine hydraulische Zylinder-Kolben-Einheit (9) zumindest bereichsweise in dem Zwischenraum zwischen den beiden Ästen (14) angeordnet ist.

4. Landfahrzeug nach Anspruch 3, **dadurch gekennzeichnet, dass** das Stützbein (3) an dem Lagerkörper (2) an zwei zueinander beabstandeten Gelenkpunkten (5) angelenkt ist, wobei die mindestens eine hydraulische Zylinder-Kolben-Einheit (9) an dem Lagerkörper zwischen den beiden Gelenkpunkten (5) angelenkt ist.

5. Landfahrzeug nach einem der Ansprüche 1 bis 4, **dadurch gekennzeichnet, dass** der Lagerkörper (2) schalenförmig ausgeführt ist und zumindest teilweise einen Raum umschließt, in welchem das Hydraulikaggregat (8) angeordnet ist.

6. Landfahrzeug nach einem der Ansprüche 1 bis 5, **dadurch gekennzeichnet, dass** sich das Hydraulikaggregat (8) bezogen auf die Anlenkung der mindestens einen hydraulischen Zylinder-Kolben-Einheit (9) an dem Lagerkörper (2) zu beiden Seiten von dieser erstreckt.

7. Landfahrzeug nach einem der Ansprüche 1 bis 6, **dadurch gekennzeichnet, dass** der Versatz zwischen der Anlenkung des Stützbeines (3) an dem Lagerkörper (2) und der der hydraulischen Zylinder-Kolben-Einheit (9) an dem Lagerkörper (2) wesentlich geringer ist als der Abstand der Anlenkung der hydraulischen Zylinder-Kolben-Einheit(9) an dem Stützbein (3) zur Anlenkung des Stützbeines an dem Lagerkörper (2).

8. Landfahrzeug nach Anspruch 1, **dadurch gekennzeichnet, dass** der Lagerkörper (2) einen Fortsatz (24) aufeist, an welchem die mindestens eine hydraulische Zylinder-Kolben-Einheit (9) der betreffenden Eckstützeinheit (1) endseitig gelenkig gelagert ist, wobei der Versatz zwischen der Anlenkung des Stützbeines (3) an dem Lagerkörper (2) und der hydraulischen Zylinder-Kolben-Einheit (9) an dem Lagerkörper (2) größer ist als der Versatz zwischen der Anlenkung des Stützbeines (3) an dem Lagerkörper (2) und der hydraulischen Zylinder-Kolben-Einheit (9) an dem Stützbein (3).

9. Landfahrzeug nach einem der Ansprüche 1 bis 8, **dadurch gekennzeichnet, dass** die mindestens eine hydraulische Zylinder-Kolben-Einheit (9) doppeltwirkend und das Hydraulikaggregat (8) reversierbar ausgeführt sind, wobei in dem hydraulischen System zwischen dem Hydraulikaggregat (8) und der mindestens einen hydraulischen Zylinder-Kolben-Einheit (9) keinerlei steuerbare Ventile vorgesehen sind.

10. Landfahrzeug nach einem der Ansprüche 1 bis 9, **dadurch gekennzeichnet, dass** ein Ausfahren der Kolbenstange (12)der mindestens einen hydraulischen Zylinder-Kolben-Einheit (9) ein Absenken des zugeordneten Stützbeines (3) bewirkt.

11. Landfahrzeug nach einem der Ansprüche 1 bis 10, **dadurch gekennzeichnet, dass** eine Notentriegelung vorgesehen ist, mittels derer ein Bypass zur Pumpe des jeweiligen Hydraulikaggregats (8) öffenbar ist.

## Claims

1. A land vehicle with a chassis and a multiplicity of corner bracing units (1) attached thereto, each of which comprises:
a bearing member (2) mounted on the chassis,
an inherently rigid bracing leg (3) linked to this with the ability to pivot around a substantially horizontal axis (A) and
a pivoting drive (4) for the bracing leg,
wherein each of the corner bracing units (1) comprises at least one hydraulic cylinder-piston unit (9) linked at its ends on the one hand to the bearing member (2) and on the other hand to the bracing leg (3), **characterized in that** each of the corner bracing units (1) further comprises a hydraulic assembly (8) disposed on the bearing member (2) and directly pressurizing the at least one cylinder-piston unit (9).

2. The land vehicle of claim 1, wherein the axis of the at least one hydraulic cylinder-piston unit (9) includes an acute angle with the prolongation of the bracing leg (3) over the entire pivoting range of the bracing leg (3).

3. The land vehicle of claim 1, wherein the bracing leg (3) is bifurcated close to the bearing member (2) and has two branches (14), wherein the at least one hydraulic cylinder-piston unit (9) is disposed at least partly in the intermediate space between the two branches (14).

4. The land vehicle of claim 3, wherein the bracing leg (3) is linked to the bearing member (2) at two hinge points (5) spaced apart from one another, wherein the at least one hydraulic cylinder-piston unit (9) is linked to the bearing member between the two hinge points (5).

5. The land vehicle of claim 1, wherein the bearing member (2) is of shell-shaped construction and encloses at least partly a space in which the hydraulic assembly (8) is disposed.

6. The land vehicle of claim 1, wherein the hydraulic assembly (8) is extended, relative to the linkage of the at least one hydraulic cylinder-piston unit (9) on the bearing member (2), on both sides thereof.

7. The land vehicle of claim 1, wherein the offset between the linkage of the bracing leg (3) to the bearing member (2) and that of the hydraulic cylinder-piston unit (9) to the bearing member (2) is much smaller than the distance of the linkage of the hydraulic cylinder-piston unit (9) on the support leg (3) from the linkage of the support leg on the bearing member (2).

8. The land vehicle of claim 1, wherein the bearing member (2) has an extension piece (24), on which the at least one hydraulic cylinder-piston unit (9) of the corner bracing unit (1) in question is mounted in hinged relationship at its ends, wherein the offset between the linkage of the bracing leg (3) to the bearing member (2) and the linkage of the hydraulic cylinder-piston unit (9) to the bearing member (2) is larger than the offset between the linkage of the bracing leg (3) to the bearing member (2) and the linkage of the hydraulic cylinder-piston unit (9) to the bracing leg (3).

9. The land vehicle of claim 1, wherein the at least one hydraulic cylinder-piston unit (9) is of double-acting construction and the hydraulic assembly (8) is of reversible construction, wherein no controllable valves of any kind are provided in the hydraulic system between the hydraulic assembly (8) and the at least one hydraulic cylinder-piston unit (9).

10. The land vehicle of claim 1, wherein extension of the piston rod (12) of the at least one hydraulic cylinder-piston unit (9) brings about lowering of the associated bracing leg (3).

11. The land vehicle of claim 1, wherein an emergency release system is provided, by means of which a bypass to the pump of the respective hydraulic assembly (8) can be opened.

## Revendications

1. Véhicule terrestre avec un châssis et une pluralité d'unités de soutien de coin (1) fixées à celui-ci, lesquelles comprennent respectivement un corps de support (2) monté sur le châssis, une jambe d'appui (3) rigide en soi, articulée à celui-ci de façon pivotante autour d'un axe essentiellement horizontal (A), ainsi qu'une commande de pivotement (4) pour la jambe d'appui, dans lequel chacune des unités de soutien de coin (1) comprend au moins une unité de piston-cylindre hydraulique (9) articulée d'une part au corps de support (2) côté extrémité et d'autre part à la jambe d'appui (3), **caractérisé en ce que** chacune des unités de soutien de coin (1) comprend en outre un agrégat hydraulique (8) agencé sur le corps de support (2), sollicitant directement l'au moins une unité de piston-cylindre hydraulique (9).

2. Véhicule terrestre selon la revendication 1, **caractérisé en ce que** sur l'ensemble de la plage de pivotement de la jambe d'appui (3), l'axe de l'au moins une unité de piston-cylindre hydraulique (9) inclut un angle aigu avec l'extension de la jambe d'appui (3).

3. Véhicule terrestre selon la revendication 1 ou 2, **caractérisé en ce que** la jambe d'appui (3) est fourchue à côté du corps de support (2) et comporte deux branches (14), dans lequel l'au moins une unité de piston-cylindre hydraulique (9) est agencée au moins par endroits dans l'espace intermédiaire entre les deux branches (14).

4. Véhicule terrestre selon la revendication 3, **caractérisé en ce que** la jambe d'appui (3) est articulée en deux points d'articulation (5) espacés l'un de l'autre sur le corps de support (2), dans lequel l'au moins une unité de piston-cylindre hydraulique (9) est articulée entre les deux points d'articulation (5) sur le corps de support.

5. Véhicule terrestre selon l'une des revendications 1 à 4, **caractérisé en ce que** le corps de support (2) est conçu en forme de coupelle et entoure au moins partiellement un espace dans lequel est agencé l'agrégat hydraulique (8).

6. Véhicule terrestre selon l'une des revendications 1 à 5, **caractérisé en ce que** l'agrégat hydraulique (8) s'étend vers les deux côtés de l'au moins une unité de piston-cylindre hydraulique (9) par rapport à l'articulation de celle-ci sur le corps de support (2).

7. Véhicule terrestre selon l'une des revendications 1 à 6, **caractérisé en ce que** le décalage entre l'articulation de la jambe d'appui (3) sur le corps de support (2) et celle de l'unité de piston-cylindre hydraulique (9) sur le corps de support (2) est nettement inférieur à l'écart entre l'articulation de l'unité de piston-cylindre hydraulique (9) sur la jambe d'appui (3) et l'articulation de la jambe d'appui sur le corps de support (2).

8. Véhicule terrestre selon la revendication 1, **caractérisé en ce que** le corps de support (2) présente un prolongement (24) sur lequel est montée de façon articulée côté extrémité l'au moins une unité de piston-cylindre hydraulique (9) de l'unités de soutien de coin (1) concernée, dans lequel le décalage entre l'articulation de la jambe d'appui (3) sur le corps de support (2) et de l'unité de piston-cylindre hydraulique (9) sur le corps de support (2) est supérieur au décalage entre l'articulation de la jambe d'appui (3) sur le corps de support (2) et de l'unité de piston-cylindre hydraulique (9) sur la jambe d'appui (3).

9. Véhicule terrestre selon l'une des revendications 1 à 8, **caractérisé en ce que** l'au moins une unité de piston-cylindre hydraulique (9) est conçue à double effet et l'agrégat hydraulique (8) est conçu réversible, dans lequel aucune soupape à commande n'est prévue dans le système hydraulique entre l'agrégat hydraulique (8) et l'au moins une unité de piston-cylindre hydraulique (9).

10. Véhicule terrestre selon l'une des revendications 1 à 9, **caractérisé en ce qu'**un déploiement de la tige de piston (12) de l'au moins une unité de piston-cylindre hydraulique (9) entraîne un abaissement de la jambe d'appui (3) correspondante.

11. Véhicule terrestre selon l'une des revendications 1 à 10, **caractérisé en ce qu'**il est prévu un déverrouillage de secours permettant d'ouvrir une dérivation vers la pompe de l'agrégat hydraulique (8) correspondant.
